(19) **Europäisches Patentamt / European Patent Office / Office européen des brevets**

(11) **EP 4 764 340 A1**

(12) **EUROPEAN PATENT APPLICATION**
published in accordance with Art. 153(4) EPC

(43) Date of publication:
**24.06.2026 Bulletin 2026/26**

(21) Application number: **24871633.4**

(22) Date of filing: **23.08.2024**

(51) International Patent Classification (IPC):
**F24F 11/64** *(2018.01)*    **G05B 23/02** *(2006.01)*
**F24F 110/10** *(2018.01)*

(52) Cooperative Patent Classification (CPC):
**G05B 23/02; F24F 2110/10; F24F 2110/64**

(86) International application number:
**PCT/JP2024/030030**

(87) International publication number:
**WO 2025/069831 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.09.2023 JP 2023161587**

(71) Applicant: **Mitsubishi Heavy Industries Thermal
Systems, Ltd.**
 **Tokyo 100-8332 (JP)**

(72) Inventors:
• **NISHIKAWA, Naoki**
 **Tokyo 100-8332 (JP)**
• **MORIKAWA, Junji**
 **Tokyo 100-8332 (JP)**
• **ARAI, Kenta**
 **Tokyo 100-8332 (JP)**

(74) Representative: **Cabinet Beau de Loménie
103, rue de Grenelle / CS 90800
75340 Paris Cedex 07 (FR)**

(54) **CONTROL DEVICE, CONTROL METHOD, AND PROGRAM**

(57) This control device comprises: an extraction unit that extracts, from time-series data obtained by measuring the indoor temperature of a space to be air-conditioned, an element included in a monitoring section from a predetermined start condition to a predetermined end condition of air-conditioning control by an air conditioner; a division unit that uses, as an element of a primary delay response, an element after a point at which the indoor temperature starts falling in the monitoring section during a cooling operation and an element after a point at which the indoor temperature starts rising in the monitoring section during a heating operation, and divides elements other than the elements of the primary delay response in the monitoring section as elements of a dead time; and an estimation unit that estimates the length of the dead time as a dead time estimation value, and estimates a time constant estimation value at which a curve approximation error from the indoor temperature in the primary delay response is minimized.

FIG. 1

**Description**

Technical Field

The present disclosure relates to a control device, a control method, and a program.

Priority is claimed on Japanese Patent Application No. 2023-161587, filed on September 25, 2023, the content of which is incorporated herein by reference.

Background Art

For example, in a case where an air conditioner performs a cooling operation, it takes time for an indoor temperature to reach a target temperature set by a user after the power is turned on, and the indoor temperature during this period is not comfortable for an occupant (user). Therefore, in order to make the room comfortable when the user occupies the room, the user uses a function (warming-up operation) of manually turning on the power of the air conditioner (indoor unit) before the time when the user is expected to start occupying the room and automatically starts precooling a certain period of time in advance (for example, 15 minutes or 30 minutes before).

An appropriate precooling time varies not only depending on an air-conditioned space such as a room but also depending on conditions such as an outside air temperature. Therefore, in a case where the time when the precooling is automatically started is fixed as in the warming-up operation described above, the precooling time may be excessive or insufficient. In a case where the precooling time of the air conditioner is excessive, energy is wasted, which leads to an increase in electricity bills. In a case where the precooling time is insufficient, the comfort is impaired.

In addition, it is considered that the air conditioner performs control in response to a change in conditions such as the outside air temperature by taking into consideration thermal response parameters including a dead time between an operation and the appearance of results, as well as a first-order delay (for example, see PTL 1 and PTL 2).

Citation List

Patent Literature

[PTL 1] Japanese Unexamined Patent Application Publication No. 2001-350503
[PTL 2] Japanese Unexamined Patent Application Publication No. 2002-054837

Summary of Invention

Technical Problem

In addition, it is considered to use a model that learns conditions such as the indoor temperature and the outside air temperature to predict the thermal response parameter. For example, in order to predict the thermal response parameter using a prediction model such as a neural network or a random forest, sufficient computational resources (memory and CPU) are required. However, in most cases, a control device (microcomputer) of a general air conditioner is equipped with only limited computational resources.

An object of the present disclosure is to provide a control device, a control method, and a program that can calculate a thermal response parameter with a lightweight algorithm even in a case where only limited computational resources are equipped.

Solution to Problem

According to one aspect of the present disclosure, a control device includes an extraction unit that extracts an element included in a monitoring interval from a predetermined start condition to a predetermined end condition of air conditioning control by an air conditioner from time-series data obtained by measuring an indoor temperature of an air-conditioning target space, and an estimation unit that estimates a dead time estimation value of a response of the indoor temperature to the air conditioning control and a time constant estimation value of a first-order delay response to the air conditioning control based on the extracted element.

According to one aspect of the present disclosure, a control method includes extracting an element included in a monitoring interval from a predetermined start condition to a predetermined end condition of air conditioning control by an air conditioner from time-series data obtained by measuring an indoor temperature of an air-conditioning target space, and estimating a dead time estimation value of a response of the indoor temperature to the air conditioning control and a time constant estimation value of a first-order delay response to the air conditioning control based on the extracted element.

According to one aspect of the present disclosure, a program causes a control device to execute a step of extracting an element included in a monitoring interval from a predetermined start condition to a predetermined end condition of air conditioning control by an air conditioner from time-series data obtained by measuring an indoor temperature of an air-conditioning target space, and a step of estimating a dead time estimation value of a response of the indoor temperature to the air conditioning control and a time constant estimation value of a first-order delay response to the air conditioning control based on the extracted element.

Advantageous Effects of Invention

According to the above-described aspect, the thermal response parameter can be calculated with a lightweight algorithm even in a case where only limited computational resources are equipped.

Brief Description of Drawings

FIG. 1 is a diagram showing a functional configuration of an air conditioning system according to a first embodiment.
FIG. 2 is a diagram illustrating an example of a prediction model according to the first embodiment.
FIG. 3 is a diagram showing an example of assignment of explanatory variables and level categories according to the first embodiment.
FIG. 4 is a flowchart showing an example of a process of estimating thermal response parameters according to the first embodiment.
FIG. 5 is a diagram showing an example of time-series data of an indoor temperature according to the first embodiment.
FIG. 6 is a flowchart showing an example of a learning process of the prediction model according to the first embodiment.
FIG. 7 is a block diagram showing an example of a process of updating the lookup table according to the first embodiment.
FIG. 8 is a flowchart showing an example of a prediction process of a predicted arrival time according to the first embodiment.
FIG. 9 is a block diagram showing an example of the prediction process of the predicted arrival time according to the first embodiment.
FIG. 10 is a diagram showing a display example of a terminal device according to the first embodiment.

Description of Embodiments

<First Embodiment>

Hereinafter, a control method according to a first embodiment will be described with reference to the accompanying drawings. Although the control method according to the present embodiment can be applied to control of various heat source devices such as an air conditioner, a water heater, and a chiller, hereinafter, an example will be described in which the control method according to the present embodiment is applied to the air conditioner.

(Overall Configuration of Air Conditioning System)

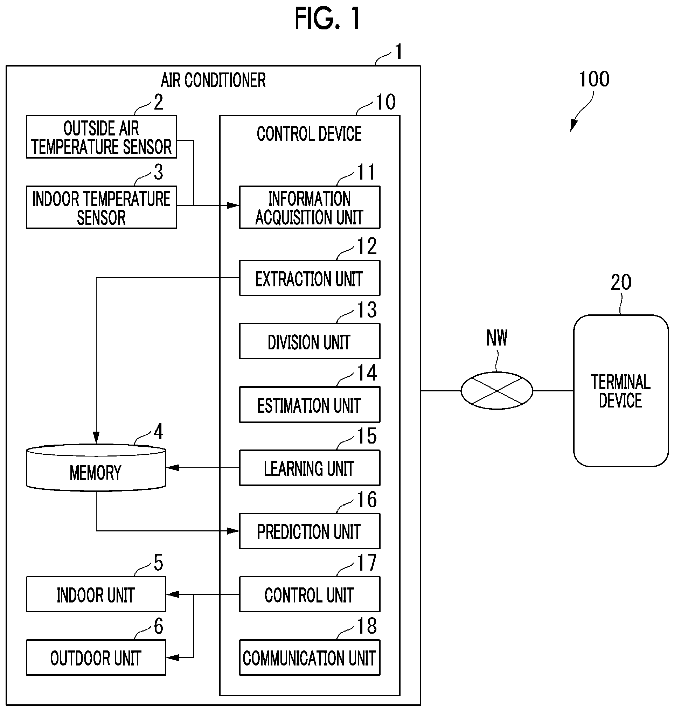

FIG. 1 is a diagram showing a functional configuration of an air conditioning system according to the first embodiment.
As shown in FIG. 1, an air conditioning system 100 includes an air conditioner 1 and a terminal device 20. The air conditioner 1 includes an outside air temperature sensor 2, an indoor temperature sensor 3, a memory 4, an indoor unit 5, and an outdoor unit 6. The outside air temperature sensor 2 and the indoor temperature sensor 3 are connected to a control device 10, and the control device 10 acquires temperatures measured by the outside air temperature sensor 2 and the indoor temperature sensor 3. The indoor unit 5 and the outdoor unit 6 are connected to the control device 10, and the control device 10 controls the indoor unit 5 and the outdoor unit 6 and detects operation states of the indoor unit 5 and the outdoor unit 6. The control device 10 and the terminal device 20 are connected so as to be able to communicate with each other via a network NW. The terminal device 20 is, for example, a smartphone or a tablet on which an application capable of remotely operating the air conditioner 1 is installed.

(Functional Configuration of Control Device)

The control device 10 is, for example, a computer including a central processing unit (CPU), such as a microcomputer or a micro processing unit (MPU). The control device 10 includes an information acquisition unit 11, an extraction unit 12, a division unit 13, an estimation unit 14, a learning unit 15, a prediction unit 16, a control unit 17, and a communication unit 18.

The information acquisition unit 11 acquires an outside air temperature measured by the outside air temperature sensor 2, and an indoor temperature measured by the indoor temperature sensor 3.

The extraction unit 12 extracts an element included in a monitoring interval from a predetermined start condition to a predetermined end condition of air conditioning control by the air conditioner 1 from time-series data of the indoor temperature of an indoor space (air-conditioning target space) in which the air conditioner 1 is provided.

The division unit 13 divides elements of the valid interval into elements of a first-order delay response and elements of a dead time, the elements of the first-order delay response including, in a cooling operation, elements of the valid interval from a point at which the indoor temperature starts to decrease and, in a heating operation, elements of the valid interval from a point at which the indoor temperature starts to increase, and the elements of the dead time including elements of the valid interval other than the elements of the first-order delay response.

The estimation unit 14 estimates a length of the dead time as a dead time estimation value L, and estimates a time constant estimation value $\tau$ at which a curve approximation error with respect to the indoor temperature in the section of the first-order delay response is minimized. The parameter including the time constant estimation value $\tau$ of the first-order delay and the dead time estimation value L is also referred to as a thermal response parameter.

The learning unit 15 trains a prediction model (lookup table) in which an explanatory variable that is a condition affecting the air conditioning of the air-conditioning target space is associated with the dead time estimation value L and the time constant estimation value $\tau$. The learned lookup table is stored in the memory 4.

The prediction unit 16 predicts a predicted arrival time D, from a current time, for the air-conditioning target space to reach a target temperature based on the trained prediction model (lookup table) read from the memory 4 and the current explanatory variable.

The control unit 17 controls the indoor unit 5 and the outdoor unit 6. The control unit 17 operates the indoor unit 5 and the outdoor unit 6 such that the air-conditioning target space approaches the set temperature at the set time based on the set temperature and the set time set by the terminal device 20 through the communication unit 18 and the predicted arrival time D predicted by the prediction unit 16. For example, the control unit 17 starts the air conditioning at a time that is the predicted arrival time D before the set time or a little before the time, and performs the cooling operation or the heating operation such that the set temperature can be achieved by the set time.

The communication unit 18 communicates with the terminal device 20. For example, the communication unit 18 transmits the predicted arrival time D predicted by the prediction unit 16 to the terminal device 20. In addition, the communication unit 18 may receive a set condition such as the set temperature and the set time or a control signal such as power ON of the air conditioner 1 from the terminal device 20.

(Prediction Model)

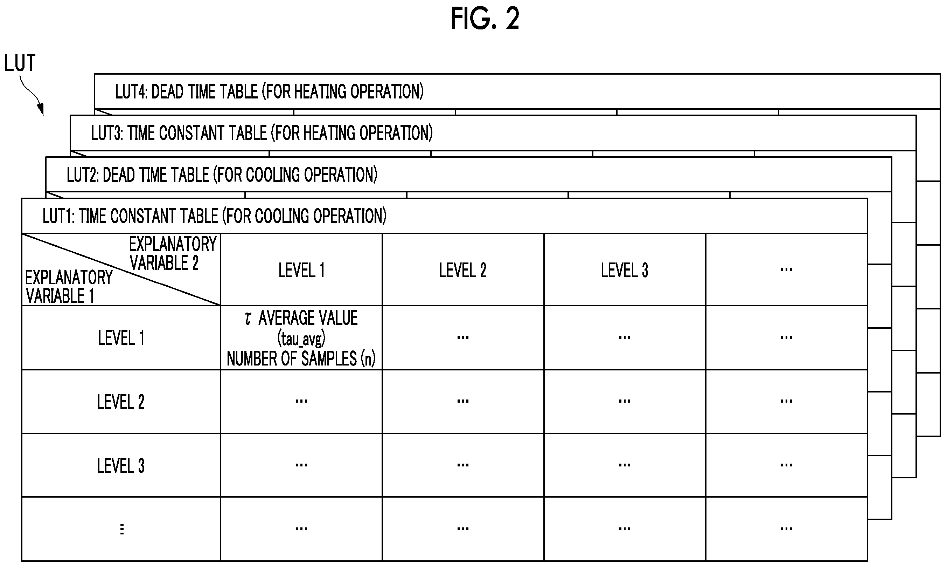

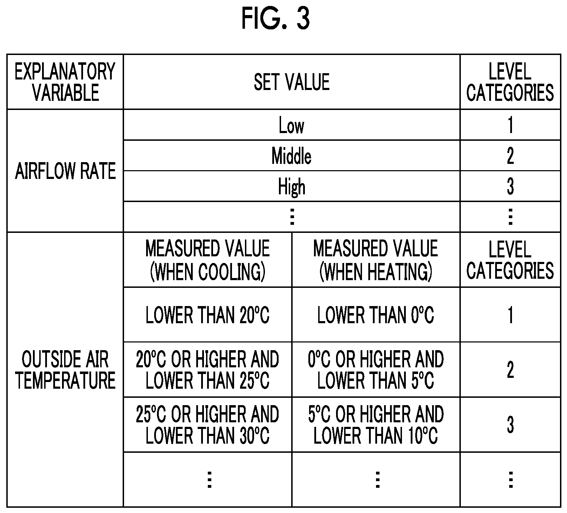

FIG. 2 is a diagram illustrating an example of the prediction model according to the first embodiment. FIG. 3 is a diagram showing an example of assignment of the explanatory variables and level categories according to the first embodiment.

As shown in FIG. 2, in the present embodiment, the prediction model of the thermal response parameters is represented by a lookup table LUT of the time constant estimation value $\tau$ and the dead time estimation value L for each operation mode. In addition, in the example of FIG. 2, the operation mode includes two modes of heating operation and cooling operation. Therefore, the lookup table LUT according to the present embodiment includes four tables of a time constant table LUT1 for the cooling operation, a dead time table LUT2 for the cooling operation, a time constant table LUT3 for the heating operation, and a dead time table LUT4 for the heating operation. Each table consists of a combination of two or more explanatory variables. Each explanatory variable has a plurality of level categories. The level category of the explanatory variable is used as an index for identifying a cell of each table.

For example, as shown in FIG. 3, it is assumed that an explanatory variable 1 is an airflow rate and an explanatory variable 2 is an outside air temperature. For example, the air volume is assigned a level category for each airflow rate set value of a fan of the indoor unit 5. In addition, the outside air temperature is assigned a level category for each range of the measured value of the outside air temperature sensor 2. The level category of the outside air temperature may be set to different temperature ranges in the cooling operation and the heating operation as in the example of FIG. 3.

That is, in the examples of FIGS. 2 and 3, each table records an estimation value of the transient thermal parameters (time constant $\tau$ or dead time L) corresponding to a combination of the airflow rate and the outside air temperature in each cell for each operation mode (heating operation or cooling operation). With this configuration, the thermal response parameters that are different depending on the setting of the air conditioner 1, the environmental conditions, or the like can be updated and referred to. In addition, the number of samples n (the number of times the thermal response parameters are recorded) is recorded in each cell. A process of updating the lookup table (learning process) and a process of referring to the lookup table (prediction process) will be described later.

(Process of Estimating Thermal Response Parameters)

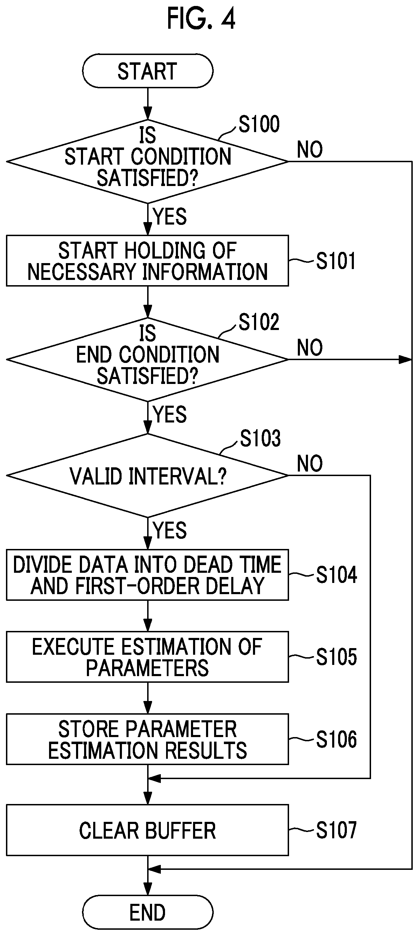

FIG. 4 is a flowchart showing an example of a process of estimating the thermal response parameters according to the first embodiment.

Here, a flow of the process of estimating the thermal response parameters by the control device 10 will be described with reference to FIG. 4. The control device 10 repeatedly executes the series of processes shown in FIG. 2 for each predetermined control cycle (for example, every 50 ms) while the air conditioner 1 is operating. In addition, during this period, the information acquisition unit 11 sequentially acquires the sensor measured value or the set value of the outside air temperature, the indoor temperature, the airflow rate, or the like from the outside air temperature sensor 2, the indoor temperature sensor 3, the indoor unit 5, or the like.

First, the extraction unit 12 determines whether or not the start condition of the monitoring interval is satisfied (step S100). The monitoring interval is an interval for monitoring (extracting and holding) data in order to estimate the thermal response parameters in the air conditioning control of the air conditioner 1. For example, the extraction unit 12 determines that the start condition of the monitoring interval is satisfied when the indoor unit 5 is switched to ON or when the set temperature is changed.

When the start condition is not satisfied (step S100; NO), the extraction unit 12 ends the process. On the other hand, when the start condition is satisfied (step S100; YES), the extraction unit 12 starts extracting and holding necessary information (step S101). Thereafter, the extraction unit 12 records the measured value (time-series data) of the indoor temperature in a buffer secured in the memory 4 for each predetermined control cycle. In addition, the extraction unit 12 records the operation mode (heating operation or cooling operation) of the air conditioner and the explanatory variable used in the learning process described later in the memory 4 only when the recording of the indoor temperature is started. The explanatory variable is, for example, a time when the holding of the measured value is started, the outside air temperature, the airflow rate of the indoor unit 5, and a temperature gap between the indoor temperature and the set temperature.

Next, the extraction unit 12 determines whether or not the predetermined end condition is satisfied (step S102). For example, the extraction unit 12 determines that the end condition is satisfied when the buffer reaches an end (upper limit number or upper limit amount of time-series data), when the indoor unit 5 is switched to OFF, or when the set temperature is changed.

When the end condition is not satisfied (step S102; NO), the extraction unit 12 temporarily ends the process. In this case, the holding of the time-series data of the indoor temperature is continuously performed. Accordingly, the indoor temperature in each step of the control cycle is extracted and held in the buffer until the extraction unit 12 determines that the end condition is satisfied. On the other hand, when the end condition is satisfied (step S102; YES), the extraction unit 12 further determines whether or not the monitoring interval is a valid interval (step S103).

For example, the extraction unit 12 determines that the monitoring interval is not valid (step S103; NO) when the time-series data does not satisfy a predetermined criterion (that is, it is difficult to estimate the thermal response parameters based on the time-series data), such as when the length of the data (time-series data of the indoor temperature) recorded in the buffer is less than a threshold value or when the indoor temperature does not reach the set temperature until the buffer end is achieved. In this case, the extraction unit 12 clears the buffer (step S106), and ends the process. On the other hand, when the time-series data satisfies the criterion, the extraction unit 12 determines that the monitoring interval is valid (step S103; YES).

Next, the division unit 13 divides the time-series data of the monitoring interval into the dead time element and the first-order delay element (step S104).

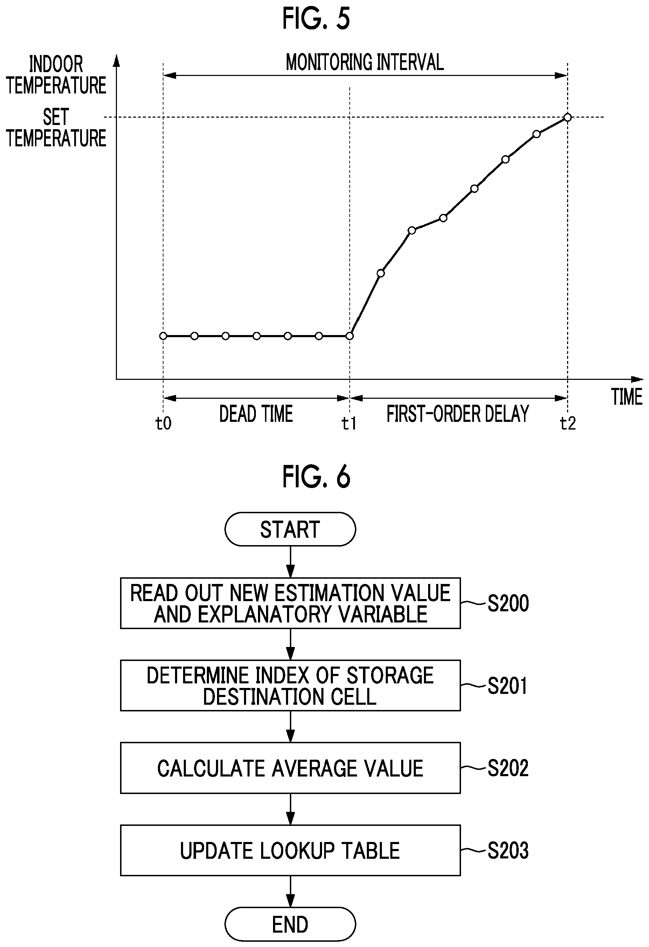

FIG. 5 is a diagram showing an example of time-series data of an indoor temperature according to the first embodiment.

FIG. 5 shows an example of the time-series data of the indoor temperature in a heating operation. In the example of FIG. 5, the extraction unit 12 extracts and records the time-series data of the indoor temperature in the monitoring interval from a time t0 to a time t2. The division unit 13 first specifies the element portion of the first-order delay response from the time-series data. For example, the division unit 13 uses, in the heating operation, the elements in the monitoring interval from the point at which the indoor temperature starts to increase as elements of the first-order delay response. More specifically, the division unit 13 searches for an extreme value (a minimum value in the heating operation) from the time-series data, and determines that the indoor temperature starts to increase in a case where the indoor temperature increases by a predetermined temperature (for example, 1°C) or more from the extreme value. In this case, the division unit 13 uses the extreme value immediately before the indoor temperature starts to increase as a boundary point, and uses the elements from the boundary point as the element of the first-order delay response. In the example of FIG. 5, the indoor temperature increases by the predetermined temperature or more from the minimum value from the time t1. Therefore, the division unit 13 sets the element at the time t1 immediately before the indoor temperature starts to increase as the boundary point, and views the element from the time t1 to the time t2 as the element of the first-order delay response.

Similarly, the division unit 13 uses, in the cooling operation, the elements in the monitoring interval from the point at which the indoor temperature starts to decrease as the elements of the first-order delay response. More specifically, the division unit 13 detects an extreme value (a maximum value in the cooling operation) from the time-series data, and determines that the indoor temperature starts to decrease in a case where the indoor temperature decreases by a predetermined temperature (for example, 1°C) or more from the extreme value.

In addition, the division unit 13 uses elements in the monitoring interval other than the elements of the first-order delay response as elements of the dead time. In the example of FIG. 5, the division unit 13 uses elements before the time t1 as the elements of the dead time.

Next, the estimation unit 14 estimates the thermal response parameters (step S105). The estimation unit 14 according to the present embodiment estimates the length of the dead time and the time constant of the first-order delay response as the thermal response parameters.

First, the estimation unit 14 obtains the length (the number of array elements) of the dead time divided by the division unit 13 from the time-series data as the dead time estimation value L. In the example of FIG. 5, the estimation unit 14 obtains the time from the time t0 to the time t1 as the dead time estimation value L.

In addition, the estimation unit 14 estimates the time constant $\tau$ of the first-order delay response based on the elements of the first-order delay response. For example, the estimation unit 14 performs a simulation (curve approximation) of the temporal change in the indoor temperature for each assumed value of the time constant while sequentially changing the assumed value of the time constant in increments of a certain time (for example, 1 minute) from the lower limit value to the upper limit value. Various known techniques may be used for the simulation. The estimation unit 14 obtains an error between an approximate curve for each assumed value of the time constant obtained by the simulation and the measured value (the first-order delay response portion of the time-series data divided by the division unit 13), and sets the assumed value of the time constant at which the error is minimized as the time constant estimation value $\tau$.

The estimation unit 14 stores the thermal response parameters including the dead time estimation value L and the time constant estimation value $\tau$ in the memory 4 in association with the operation mode and the explanatory variable that are recorded earlier (step S106). Thereafter, the estimation unit 14 clears the buffer (step S107), and ends the process.

(Learning Process of Prediction Model)

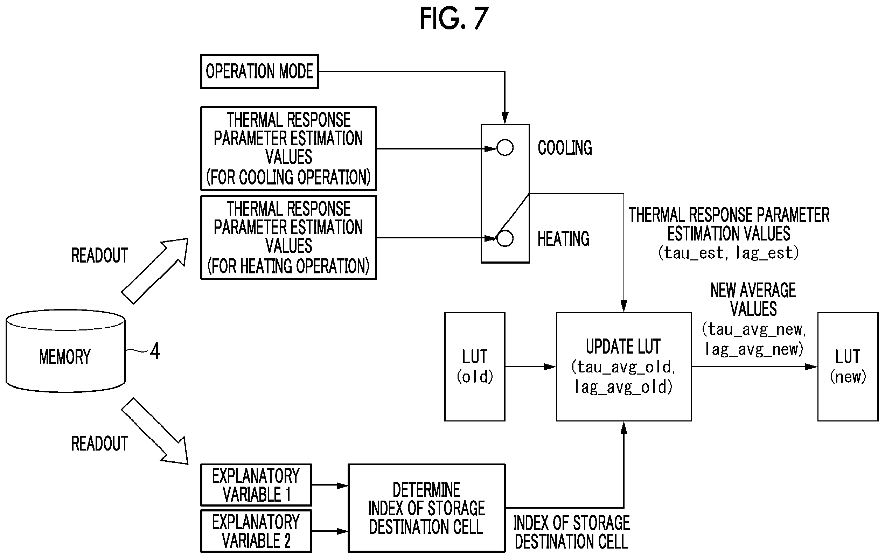

FIG. 6 is a flowchart showing an example of the learning process of the prediction model according to the first embodiment. FIG. 7 is a block diagram showing an example of a process of updating the lookup table according to the first embodiment.

Here, a flow of the learning process of the prediction model by the control device 10 will be described with reference to FIGS. 6 and 7. The control device 10 executes the series of processes shown in FIG. 6 each time the estimation unit 14 estimates the thermal response parameters.

First, the learning unit 15 reads out the estimation values of the thermal response parameters that are newly estimated by the estimation unit 14 and the explanatory variables recorded together with the estimation values from the memory 4 (step S200).

Next, the learning unit 15 determines an index of a storage destination cell of the estimation values of the thermal response parameters that are newly estimated (step S201).

First, the learning unit 15 stores the table in any of the table for the heating operation and the table for the cooling operation based on the operation mode read out from the memory 4. Further, the learning unit 15 determines the index of the storage destination cell based on the values of the explanatory variables read out from the memory 4. For example, it is assumed that the operation mode is the heating operation, the explanatory variable 1 (airflow rate) is Middle, and the explanatory variable 2 (outside air temperature) is 6°C. According to the examples of FIGS. 2 and 3, the explanatory variable 1 corresponds to the level 2, and the explanatory variable 2 corresponds to the level 3. Therefore, in this case, the learning unit 15 determines cells at which a row of the level 2 of the explanatory variable 1 and a column of the level 3 of the explanatory variable 2 intersect in the time constant table LUT3 for the heating operation and the dead time table LUT4 for the heating operation shown in FIG. 2 as the storage destination cell of each of the time constant estimation value $\tau$ (tau_est) and the dead time estimation value L (lag_est).

Then, the learning unit 15 calculates an average value of the new estimation value and the past estimation value (step S202). The learning unit 15 first reads out a value recorded in the storage destination cell of each table as a past average value (tau_avg_old, lag_avg_old).

In addition, the learning unit 15 calculates an average value (tau_avg_new, lag_avg_new) of the new thermal response parameter estimation value (tau_est, lag_est) and the past average value (tau_avg_old, lag_avg_old) read from the storage destination cell. In this case, the learning unit 15 may calculate the new average value by performing a weighted average with a weight $\alpha$ as in the following expressions (1) and (2). The weight $\alpha$ may be set to any value in a range of, for example, "$0 < \alpha \leq 1$".

$$\text{tau\_avg\_new} = \alpha * \text{tau\_est} + (1 - \alpha) * \text{tau\_avg\_old} \ ... \ (1)$$

$$\text{lag\_avg\_new} = \alpha * \text{lag\_est} + (1 - \alpha) * \text{lag\_avg\_old} \ ... \ (2)$$

The learning unit 15 updates the lookup table LUT by inputting the calculated new average value (tau_avg_new, lag_avg_new) to the storage destination cell (step S203). In this case, the learning unit 15 adds 1 to the number of samples n of this storage destination cell.

When the number of samples n of the storage destination cell is 0, that is, when the thermal response parameters are input to the storage destination cell for the first time, the learning unit 15 does not calculate the average value, but directly inputs the thermal response parameter estimation values (tau_est and lag_est) read out from the memory 4 to the storage destination cell to update the lookup table LUT (step S202).

(Prediction Process of Predicted Arrival Time)

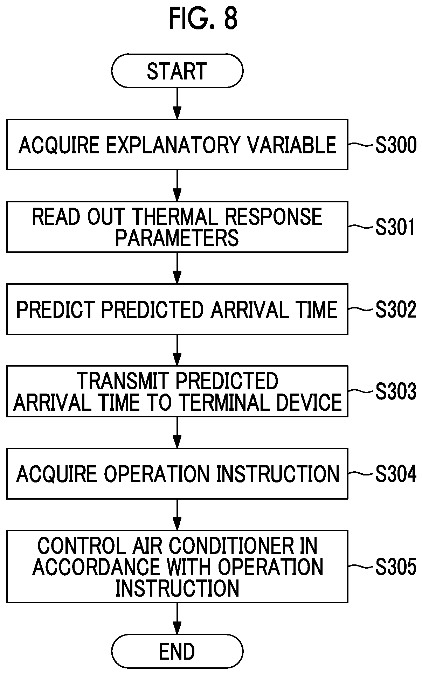

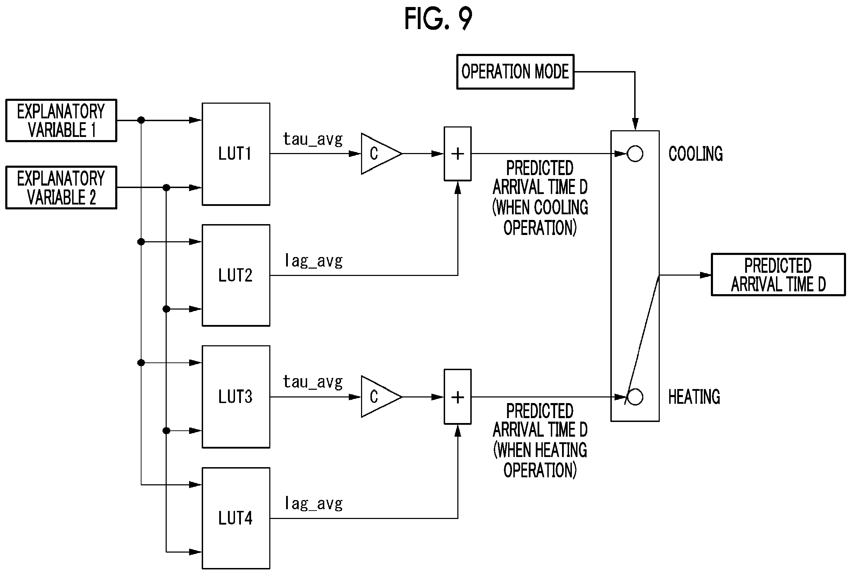

FIG. 8 is a flowchart showing an example of a prediction process of the predicted arrival time according to the first embodiment. FIG. 9 is a block diagram showing an example of the prediction process of the predicted arrival time according to the first embodiment.

Here, a flow of the prediction process of the predicted arrival time for the indoor temperature to reach the set temperature will be described with reference to FIGS. 8 and 9. The control device 10 executes the series of processes shown in FIG. 8, for example, when the application of the terminal device 20 is started or operated.

First, the information acquisition unit 11 acquires the explanatory variables used for prediction (step S300). For example, when the explanatory variable 1 is the airflow rate and the explanatory variable 2 is the outside air temperature, the information acquisition unit 11 acquires the airflow rate set value of the air conditioner 1 (indoor unit 5), and acquires the current outside air temperature from the outside air temperature sensor 2. In addition, the information acquisition unit 11 may acquire the current set temperature (when the power is OFF, the set temperature during the previous operation) at the same time.

Next, the prediction unit 16 reads out the thermal response parameters corresponding to the acquired explanatory variables (step S301). For example, when the current operation mode (when the power is OFF, the operation mode during the previous operation) is the heating operation, the prediction unit 16 reads out the parameters (tau_avg and lag_avg) corresponding to the explanatory variables from the time constant table LUT3 for the heating operation and the dead time table LUT4 for the heating operation. A method of determining the index of the storage destination cell of each parameter is the same as the method in step S201 of FIG. 6.

In addition, the prediction unit 16 predicts the predicted arrival time D for the indoor temperature of the air-conditioning target space to reach the target temperature based on the read-out thermal response parameters (step S302). The predicted arrival time D is calculated by, for example, the following expression (3). The target temperature is represented by, for example, x% (any value such as 90% and 95%) of the current set temperature. In addition, the coefficient C of the time constant $\tau$ (tau_avg) can be changed according to the target temperature. For example, when the target temperature is 95% of the set temperature, C = 3, and when the target temperature is 90% of the set temperature, C = 2.3.

$$D = C \times \text{tau\_avg} + \text{lag\_avg} \ ... \ (3)$$

Next, the communication unit 18 transmits the predicted arrival time D predicted by the prediction unit 16 to the terminal device 20 (step S303).

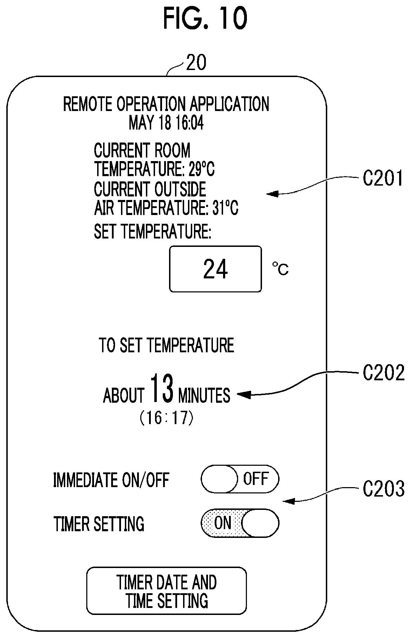

FIG. 10 is a diagram showing a display example of the terminal device according to the first embodiment.

For example, as shown in FIG. 10, an application screen of the terminal device 20 displays information such as current information C201 and prediction information C202, and an operation reception portion C203 that receives the remote operation of the air conditioner 1 performed by the user is displayed. The current information C201 includes information such as the current date and time, the indoor temperature, the outside air temperature, and the set temperature. The prediction information C202 includes the predicted arrival time D received from the control device 10 of the air conditioner 1. In addition, the prediction information C202 may include a predicted time obtained by adding the predicted arrival time D to the current time. In addition, the operation reception portion C203 may include an "immediate ON/OFF button", a "timer setting ON/OFF button", a "timer date and time setting button", and the like.

The user remotely operates the air conditioner 1 via the operation reception portion C203 while referring to the current time and the predicted arrival time D to the set temperature. For example, in the example of FIG. 10, it is assumed that the predicted arrival time D to the set temperature is about 13 minutes, and the user plans to occupy the air-conditioning target space in about 15 minutes. In this case, the user turns on the power of the air conditioner 1 by operating the "immediate ON/OFF button". Then, the control unit 17 of the control device 10 acquires the operation instruction (power ON) from the terminal device 20 through the communication unit 18 (step S304), and performs the control of turning on the power of the air conditioner 1 (indoor unit 5) (step S305).

In addition, for example, in a case where there is time before the user occupies the air-conditioning target space, the user may operate the "timer setting ON/OFF" button of the operation reception portion C203 of the terminal device 20 to set the timer to ON. In addition, the timer date and time setting may be operated to set the indoor temperature to the set temperature at any set time. Then, the control unit 17 of the control device 10 acquires the operation instruction (timer setting ON and the set time) from the terminal device 20 through the communication unit 18 (step S304), and automatically starts the air conditioning at a time that is the predicted arrival time D before the set time or a little before the time such that the set temperature is achieved at the set time set for the user in the air-conditioning target space, and then performs the cooling operation or the heating operation such that the set temperature can be achieved by the set time (step S305).

Further, the user may change the current set temperature. For example, the set temperature may be changed by tapping a set temperature portion of the current information C201. Then, the control device 10 acquires the operation instruction (instruction to change the set temperature) from the terminal device 20 through the communication unit 18. In this case, the control device 10 may return to step S302 and re-execute the prediction of the predicted arrival time.

(Operations and Effects)

As described above, the control device 10 according to the present embodiment includes the extraction unit 12 that extracts an element included in a monitoring interval from a predetermined start condition to a predetermined end condition from time-series data obtained by measuring an indoor temperature of an air-conditioning target space, and the estimation unit 14 that estimates the dead time estimation value L of the response of the indoor temperature to the air conditioning control of the air conditioner 1 and the time constant estimation value $\tau$ of the first-order delay response to the air conditioning control of the air conditioner 1 based on the extracted element.

The control device 10 can reduce the calculation load by estimating, as the thermal response parameter, only two scalar quantities of the dead time estimation value L and the time constant $\tau$ of the first-order delay from a limited number of elements included in the monitoring interval. Therefore, the estimation of the thermal response parameter can be realized even in the control device 10 of the air conditioner 1 having limited computational resources.

In addition, the control device 10 further includes the division unit 13 that divides elements in the monitoring interval into elements of a first-order delay response and elements of a dead time, the elements of the first-order delay response including, in a cooling operation, elements in the monitoring interval from a point at which the indoor temperature starts to decrease and, in a heating operation, elements in the monitoring interval from a point at which the indoor temperature starts to increase, and the elements of the dead time including elements in the monitoring interval other than the elements of the first-order delay response, and the estimation unit 14 estimates a length of the elements of the dead time as a dead time estimation value L, and estimates a time constant at which a curve approximation error with respect to the indoor temperature in the first-order delay response is minimized as the time constant estimation value $\tau$.

In this way, the control device 10 can reduce the calculation load by a corresponding amount because the control device 10 can perform the calculation by omitting the time-series data corresponding to the dead time in a case of estimating the time constant of the first-order delay response. As a result, even in a case where only limited computational resources are equipped, the thermal response parameter (the dead time and the time constant of the first-order delay response) can be calculated with a lightweight algorithm.

In addition, the estimation unit 14 stores the estimated dead time estimation value L and the estimated time constant estimation value $\tau$, and deletes (clears the buffer) the extracted element.

For example, in a case of constructing a model that predicts the thermal response parameter by machine learning, it is necessary to collect a large number of samples by using the element of a certain monitoring interval as one sample and to perform the learning. For example, in a case where learning is performed using 100 samples each having a length N = 120 points (time-series data obtained by recording the temperature change per minute for 120 minutes), it is necessary to prepare a memory for storing data of 120 points $\times$ 100 samples. However, as described above, since the control device of the general air conditioner has limited computational resources such as the memory, it is difficult to store such a large amount of data. On the other hand, in the present embodiment, the estimation unit 14 estimates and stores the dead time estimation value L and the time constant estimation value $\tau$ from the elements for the monitoring interval, and then deletes the elements used for the estimation. In this way, even in a case where the control device 10 needs to accumulate a large number (100) of samples as the past data, each sample only needs to include two numerical values of the dead time estimation value L and the time constant estimation value $\tau$, so that the past data can be compressed (compressed to 2/N as compared with the case of using machine learning) and stored. In addition, the element used for the estimation of the thermal response parameter need only be temporarily stored for one sample, and may be deleted each time the estimation is performed, and a new element may be stored in the same buffer in the next estimation. Therefore, the control device 10 can reduce the capacity of the buffer and the memory used as a whole.

In addition, the control device 10 further includes the prediction unit 16 that predicts the predicted arrival time, from the current time, for the air-conditioning target space to reach the target temperature based on the lookup table LUT in which the explanatory variable that is the condition affecting the air conditioning of the air-conditioning target space is associated with the dead time estimation value L and the time constant estimation value $\tau$, and the current explanatory variable.

In this way, the control device 10 can accurately predict the predicted arrival time D for the air-conditioning target space to reach the target temperature by using the thermal response parameter calculated during the operation of the air conditioner 1.

In addition, the control device 10 further includes the communication unit 18 that transmits the predicted arrival time D to the terminal device 20 held by the user and receives the operation instruction of the user from the terminal device 20, and the control unit 17 that controls the air conditioner 1 based on the operation instruction.

In this way, the control device 10 can receive the operation instruction from the user who refers to the predicted arrival time D, and perform the cooling operation or the heating operation such that the indoor temperature approaches the set temperature before the user occupies the air-conditioning target space.

<Another Embodiment>

The embodiments have been described in detail above with reference to the drawings, but the specific configuration is not limited to the above description, and various design changes and the like can be made. That is, in another embodiment, the order of the above processes may be changed as appropriate. Further some of the processes may be executed in parallel.

For example, in the above embodiments, the example has been described in which the control device 10 (learning unit 15) of the air conditioner 1 trains the prediction model (lookup table LUT), but the present disclosure is not limited to this. In another embodiment, the thermal response parameters estimated by the control devices 10 (estimation unit 14) of a plurality of air conditioners 1 may be transmitted to a server to be aggregated, and the server may train the prediction model. In this case, the server performs statistical processing, machine learning, or the like using a large number of thermal response parameters to generate and update the prediction model. In addition, the server periodically predicts the thermal response parameters (time constant $\tau$ and dead time L) for each air conditioner 1 by the prediction model, and transmits the prediction results to each air conditioner 1. The control device 10 (learning unit 15) of the air conditioner 1 overwrites the lookup table LUT of the memory 4 with the thermal response parameters received from the server. In still another embodiment, the application of the terminal device 20 may acquire the thermal response parameters from the control device 10, and train the prediction model. The application of the terminal device 20 periodically predicts the thermal response parameters (time constant $\tau$ and dead time L) of the air conditioner 1 by the prediction model, and transmits the prediction results to the air conditioner 1. The control device 10 (learning unit 15) of the air conditioner 1 overwrites the lookup table LUT of the memory 4 with the thermal response parameters received from the terminal device 20. With this configuration, the process load of the learning unit 15 can be reduced.

<Supplementary Note>

The control device, the control method, and the program according to the above embodiments are understood as follows, for example.

(1) According to a first aspect, a control device 10 includes an extraction unit 12 that extracts an element included in a monitoring interval from a predetermined start condition to a predetermined end condition of air conditioning control by an air conditioner 1 from time-series data obtained by measuring an indoor temperature of an air-conditioning target space, and an estimation unit 14 that estimates a dead time estimation value L of a response of the indoor temperature to the air conditioning control and a time constant estimation value $\tau$ of a first-order delay response to the air conditioning control based on the extracted element.

The control device 10 can reduce the calculation load by estimating, as the thermal response parameter, only two scalar quantities of the dead time estimation value L and the time constant $\tau$ of the first-order delay from a limited number of elements included in the monitoring interval. Therefore, the estimation of the thermal response parameter can be realized even in the control device 10 of the air conditioner 1 having limited computational resources.

(2) According to a second aspect, the control device 10 according to the first aspect further includes the division unit 13 that divides elements in the monitoring interval into elements of the first-order delay response and elements of a dead time, the elements of the first-order delay response including, in a cooling operation, elements in the monitoring interval from a point at which the indoor temperature starts to decrease and, in a heating operation, elements in the monitoring interval from a point at which the indoor temperature starts to increase, and the elements of the dead time including elements in the monitoring interval other than the elements of the first-order delay response, and the estimation unit 14 estimates a length of the elements of the dead time as a dead time estimation value L, and estimates a time constant at which a curve approximation error with respect to the indoor temperature in the first-order delay response is minimized as the time constant estimation value $\tau$.

In this way, the control device 10 can reduce the calculation load by a corresponding amount because the control device 10 can perform the calculation by omitting the time-series data corresponding to the dead time in a case of estimating the time constant of the first-order delay response. As a result, even in a case where only limited computational resources are equipped, the thermal response parameter (the dead time and the time constant of the first-order delay response) can be calculated with a lightweight algorithm.

(3) According to a third aspect, in the control device 10 according to the first or second aspect, the estimation unit 14 stores the estimated dead time estimation value L and the estimated time constant estimation value $\tau$, and deletes the extracted element.

For example, in a case of constructing a model that predicts the thermal response parameter by machine learning, it is necessary to collect a large number of samples by using the element of a certain monitoring interval as one sample and to perform the learning. For example, in a case where learning is performed using 100 samples each having a length N = 120 points (time-series data obtained by recording the temperature change per minute for 120 minutes), it is necessary to prepare a memory for storing data of 120 points × 100 samples. However, as described above, since the control device of the general air conditioner has limited computational resources such as the memory, it is difficult to store such a large amount of data. On the other hand, in the present embodiment, the estimation unit 14 estimates and stores the dead time estimation value L and the time constant estimation value $\tau$ from the elements for the monitoring interval, and then deletes the elements used for the estimation. In this way, even in a case where the control device 10 needs to accumulate a large number (100) of samples as the past data, each sample only needs to include two numerical values of the dead time estimation value L and the time constant estimation value $\tau$, so that the past data can be compressed (compressed to 2/N as compared with the case of using machine learning) and stored. In addition, the element used for the estimation of the thermal response parameter need only be temporarily stored for one sample, and may be deleted each time the estimation is performed, and a new element may be stored in the same buffer in the next estimation. Therefore, the control device 10 can reduce the capacity of the buffer and the memory used as a whole.

(4) According to a fourth aspect, the control device 10 according to any one of the first to third aspects further includes a learning unit 15 that learns a lookup table LUT in which an explanatory variable that is a condition affecting air conditioning of the air-conditioning target space is associated with the dead time estimation value L and the time constant estimation value $\tau$, and a prediction unit 16 that predicts a predicted arrival time D, from a current time, for the air-conditioning target space to reach a target temperature based on the lookup table LUT and a current explanatory variable.

In this way, the control device 10 can accurately predict the predicted arrival time D for the air-conditioning target space to reach the target temperature by using the thermal response parameter calculated during the operation of the air conditioner 1. In addition, unlike a machine learning model such as a neural network or a random forest having a large calculation load, the control device 10 can sufficiently perform the learning of the prediction model and the prediction using the prediction model even with limited computational resources by using the lightweight lookup table in which the explanatory variable is associated with the dead time estimation value L and the time constant estimation value $\tau$ as the prediction model.

(5) According to a fifth aspect, the control device 10 according to the fourth aspect further includes a communication unit 18 that transmits the predicted arrival time D to a terminal device 20 held by a user and receives an operation instruction of the user from the terminal device 20, and a control unit 17 that controls the air conditioner 1 based on the operation instruction.

In this way, the control device 10 can receive the operation instruction from the user who refers to the predicted arrival time D, and perform the cooling operation or the heating operation such that the indoor temperature approaches the set temperature before the user occupies the air-conditioning target space.

(6) According to a sixth aspect, a control method includes extracting an element included in a monitoring interval from a predetermined start condition to a predetermined end condition of air conditioning control by an air conditioner 1 from time-series data obtained by measuring an indoor temperature of an air-conditioning target space, and estimating a dead time estimation value L of a response of the indoor temperature to the air conditioning control and a time constant estimation value $\tau$ of a first-order delay response to the air conditioning control based on the extracted element.

(7) According to a seventh aspect, a program causes a control device 10 to execute a step of extracting an element included in a monitoring interval from a predetermined start condition to a predetermined end condition of air conditioning control by an air conditioner 1 from time-series data obtained by measuring an indoor temperature of an air-conditioning target space, and a step of estimating a dead time estimation value L of a response of the indoor temperature to the air conditioning control and a time constant estimation value $\tau$ of a first-order delay response to the air conditioning control based on the extracted element. Industrial Applicability

According to the above-described aspect, the thermal response parameter can be calculated with a lightweight algorithm even in a case where only limited computational resources are equipped.

Reference Signs List

1: air conditioner
2: outside air temperature sensor
3: indoor temperature sensor
4: memory
5: indoor unit
6: outdoor unit
10: control device
11: information acquisition unit
12: extraction unit
13: division unit
14: estimation unit
15: learning unit
16: prediction unit
17: control unit
18: communication unit
20: terminal device
100: air conditioning system
LUT: lookup table

**Claims**

1. A control device comprising:

   an extraction unit that extracts an element included in a monitoring interval from a predetermined start condition to a predetermined end condition of air conditioning control by an air conditioner from time-series data obtained by measuring an indoor temperature of an air-conditioning target space; and
   an estimation unit that estimates a dead time estimation value of a response of the indoor temperature to the air conditioning control and a time constant estimation value of a first-order delay response to the air conditioning control based on the extracted element.

2. The control device according to claim 1, further comprising:

   a division unit that divides elements in the monitoring interval into elements of the first-order delay response and elements of a dead time, the elements of the first-order delay response including, in a cooling operation, elements in the monitoring interval from a point at which the indoor temperature starts to decrease and, in a heating operation, elements in the monitoring interval from a point at which the indoor temperature starts to increase, and the elements of the dead time including elements in the monitoring interval other than the elements of the first-order delay response,
   wherein the estimation unit estimates a length of the elements of the dead time as a dead time estimation value, and estimates a time constant at which a curve approximation error with respect to the indoor temperature in the first-order delay response is minimized as the time constant estimation value.

3. The control device according to claim 1, wherein the estimation unit stores the estimated dead time estimation value and the estimated time constant estimation value, and deletes the extracted element.

4. The control device according to any one of claims 1 to 3, further comprising:

a learning unit that learns a lookup table in which an explanatory variable that is a condition affecting air conditioning of the air-conditioning target space is associated with the dead time estimation value and the time constant estimation value; and
a prediction unit that predicts a predicted arrival time, from a current time, for the air-conditioning target space to reach a target temperature based on the lookup table and a current explanatory variable.

5. The control device according to claim 4, further comprising:

a communication unit that transmits the predicted arrival time to a terminal device held by a user and receives an operation instruction of the user from the terminal device; and
a control unit that controls the air conditioner based on the operation instruction.

6. A control method comprising:

a step of extracting an element included in a monitoring interval from a predetermined start condition to a predetermined end condition of air conditioning control by an air conditioner from time-series data obtained by measuring an indoor temperature of an air-conditioning target space; and
a step of estimating a dead time estimation value of a response of the indoor temperature to the air conditioning control and a time constant estimation value of a first-order delay response to the air conditioning control based on the extracted element.

7. A program causing a control device to execute:

a step of extracting an element included in a monitoring interval from a predetermined start condition to a predetermined end condition of air conditioning control by an air conditioner from time-series data obtained by measuring an indoor temperature of an air-conditioning target space; and
a step of estimating a dead time estimation value of a response of the indoor temperature to the air conditioning control and a time constant estimation value of a first-order delay response to the air conditioning control based on the extracted element.

# FIG. 1

# FIG. 2

LUT

| LUT4: DEAD TIME TABLE (FOR HEATING OPERATION) |
| LUT3: TIME CONSTANT TABLE (FOR HEATING OPERATION) |
| LUT2: DEAD TIME TABLE (FOR COOLING OPERATION) |
| LUT1: TIME CONSTANT TABLE (FOR COOLING OPERATION) |

| EXPLANATORY VARIABLE 1 \ EXPLANATORY VARIABLE 2 | LEVEL 1 | LEVEL 2 | LEVEL 3 | ... |
|---|---|---|---|---|
| LEVEL 1 | $\tau$ AVERAGE VALUE (tau_avg) NUMBER OF SAMPLES (n) | ... | ... | ... |
| LEVEL 2 | ... | ... | ... | ... |
| LEVEL 3 | ... | ... | ... | ... |
| ⋮ | ... | ... | ... | ... |

EP 4 764 340 A1

# FIG. 3

| EXPLANATORY VARIABLE | SET VALUE | | LEVEL CATEGORIES |
|---|---|---|---|
| AIRFLOW RATE | Low | | 1 |
| | Middle | | 2 |
| | High | | 3 |
| | ⋮ | | ⋮ |
| OUTSIDE AIR TEMPERATURE | MEASURED VALUE (WHEN COOLING) | MEASURED VALUE (WHEN HEATING) | LEVEL CATEGORIES |
| | LOWER THAN 20°C | LOWER THAN 0°C | 1 |
| | 20°C OR HIGHER AND LOWER THAN 25°C | 0°C OR HIGHER AND LOWER THAN 5°C | 2 |
| | 25°C OR HIGHER AND LOWER THAN 30°C | 5°C OR HIGHER AND LOWER THAN 10°C | 3 |
| | ⋮ | ⋮ | ⋮ |

## FIG. 4

```
          ┌──────────┐
          │  START   │
          └──────────┘
                │
                ▼
         ╱ IS ╲  ～S100
       ╱ START CONDITION ╲   NO
      ⟨   SATISFIED?      ⟩──────────┐
       ╲                 ╱           │
         ╲              ╱            │
             │ YES                   │
             ▼                       │
    ┌────────────────────┐          │
    │  START HOLDING OF   │ ～S101   │
    │ NECESSARY INFORMATION│         │
    └────────────────────┘          │
             │                       │
             ▼                       │
         ╱ IS ╲  ～S102              │
       ╱ END CONDITION ╲    NO       │
      ⟨   SATISFIED?    ⟩────────────▶
       ╲               ╱             │
             │ YES                   │
             ▼                       │
       ╱ VALID INTERVAL? ╲ ～S103 NO │
      ⟨                   ⟩──────┐   │
       ╲                 ╱       │   │
             │ YES               │   │
             ▼                   │   │
  ┌──────────────────────┐      │   │
  │ DIVIDE DATA INTO DEAD │～S104 │   │
  │ TIME AND FIRST-ORDER  │      │   │
  │      DELAY            │      │   │
  └──────────────────────┘      │   │
             │                   │   │
             ▼                   │   │
  ┌──────────────────────┐      │   │
  │ EXECUTE ESTIMATION OF │～S105 │   │
  │     PARAMETERS        │      │   │
  └──────────────────────┘      │   │
             │                   │   │
             ▼                   │   │
  ┌──────────────────────┐      │   │
  │  STORE PARAMETER      │～S106 │   │
  │ ESTIMATION RESULTS    │      │   │
  └──────────────────────┘      │   │
             │◀─────────────────┘   │
             ▼                       │
  ┌──────────────────────┐          │
  │    CLEAR BUFFER       │～S107     │
  └──────────────────────┘          │
             │◀─────────────────────┘
             ▼
       ┌──────────┐
       │   END    │
       └──────────┘
```

16

## FIG. 5

## FIG. 6

# FIG. 7

OPERATION MODE

THERMAL RESPONSE
PARAMETER ESTIMATION
VALUES
(FOR COOLING OPERATION)

THERMAL RESPONSE
PARAMETER ESTIMATION
VALUES
(FOR HEATING OPERATION)

COOLING

HEATING

THERMAL RESPONSE PARAMETER
ESTIMATION VALUES
(tau_est, lag_est)

READOUT

MEMORY ~4

READOUT

LUT
(old)

UPDATE LUT
(tau_avg_old,
lag_avg_old)

NEW AVERAGE
VALUES
(tau_avg_new,
lag_avg_new)

LUT
(new)

EXPLANATORY
VARIABLE 1

EXPLANATORY
VARIABLE 2

DETERMINE
INDEX OF STORAGE
DESTINATION CELL

INDEX OF STORAGE
DESTINATION CELL

EP 4 764 340 A1

# FIG. 8

START

↓

ACQUIRE EXPLANATORY VARIABLE ── S300

↓

READ OUT THERMAL RESPONSE PARAMETERS ── S301

↓

PREDICT PREDICTED ARRIVAL TIME ── S302

↓

TRANSMIT PREDICTED ARRIVAL TIME TO TERMINAL DEVICE ── S303

↓

ACQUIRE OPERATION INSTRUCTION ── S304

↓

CONTROL AIR CONDITIONER IN ACCORDANCE WITH OPERATION INSTRUCTION ── S305

↓

END

FIG. 9

EP 4 764 340 A1

## FIG. 10

20

REMOTE OPERATION APPLICATION
MAY 18 16:04

CURRENT ROOM
TEMPERATURE: 29°C
CURRENT OUTSIDE
AIR TEMPERATURE: 31°C — C201
SET TEMPERATURE:

| 24 | °C |

TO SET TEMPERATURE

ABOUT 13 MINUTES — C202
(16:17)

IMMEDIATE ON/OFF  OFF
— C203
TIMER SETTING  ON

TIMER DATE AND
TIME SETTING

## INTERNATIONAL SEARCH REPORT

| International application No. |
| --- |
| **PCT/JP2024/030030** |

| A. | CLASSIFICATION OF SUBJECT MATTER |
| --- | --- |

*F24F 11/64*(2018.01)i; *G05B 23/02*(2006.01)i; *F24F 110/10*(2018.01)n
FI:   F24F11/64: G05B23/02 P; F24F110:10

According to International Patent Classification (IPC) or to both national classification and IPC

| B. | FIELDS SEARCHED |
| --- | --- |

Minimum documentation searched (classification system followed by classification symbols)

F24F11/00-11/89; F25B1/00-49/04; G05B13/02, 23/02; G05D23/00-23/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2018-013980 A (KABUSHIKI KAISHA TOSHIBA) 25 January 2018 (2018-01-25) paragraphs [0018], [0021]-[0031], [0054]-[0058], fig. 2-6 | 1-3, 6-7 |
| A | | 4-5 |
| A | CN 115950057 A (GREE ELECTRIC APPLIANCES, INC. OF ZHUHAI) 11 April 2023 (2023-04-11) entire text, all drawings | 1-7 |
| A | WO 2022/215243 A1 (MITSUBISHI ELECTRIC CORPORATION) 13 October 2022 (2022-10-13) paragraphs [0032]-[0037], fig. 1-4 | 1-7 |
| A | JP 64-028443 A (MITSUBISHI ELECTRIC CORPORATION) 31 January 1989 (1989-01-31) entire text, all drawings | 1-7 |
| A | WO 2016/194397 A1 (MITSUBISHI ELECTRIC CORPORATION) 08 December 2016 (2016-12-08) paragraph [0051], fig. 6 | 1-7 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 September 2024** | **01 October 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (July 2022)

**INTERNATIONAL SEARCH REPORT**
Information on patent family members

International application No.

**PCT/JP2024/030030**

| Patent document cited in search report | | | Publication date (day/month/year) | Patent family member(s) | Publication date (day/month/year) |
|---|---|---|---|---|---|
| JP | 2018-013980 | A | 25 January 2018 | (Family: none) | |
| CN | 115950057 | A | 11 April 2023 | (Family: none) | |
| WO | 2022/215243 | A1 | 13 October 2022 | (Family: none) | |
| JP | 64-028443 | A | 31 January 1989 | (Family: none) | |
| WO | 2016/194397 | A1 | 08 December 2016 | EP 3306204 A1 paragraph [0039], fig. 6 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023161587 A
- JP 2001350503 A
- JP 2002054837 A